# EUROPÄISCHE PATENTSCHRIFT

(11) **EP 0 806 396 B1**
(45) Veröffentlichungstag und Bekanntmachung des Hinweises auf die Patenterteilung: **07.07.1999**
(21) Anmeldenummer: 97106778.0
(22) Anmeldetag: 24.04.1997
(51) Int. Cl.: C01G 1/12

(54) **Verfahren zur Herstellung von Metalldisulfiden und deren Weiterverarbeitung zu Dimetalltrisulfiden**
Process for the preparation of metal disulfides and further processing thereof to dimetal trisulfides
Procédé pour la préparation de disulfures métalliques et leur traitement ultérieur pour obtenir des trisulfures bimétalliques

(30) Priorität: 07.05.1996 DE 19618170
(43) Veröffentlichungstag der Anmeldung: 12.11.1997
(73) Patentinhaber: H.C. Starck GmbH & Co. KG, 38642 Goslar (DE)
(72) Erfinder: Fister, Dietmar, Dr., 79730 Murg (DE)
(74) Vertreter: Steiling, Lothar, Dr.

(56) Entgegenhaltungen:
- FR-A- 2 333 753
- GB-A- 2 175 292
- US-A- 3 937 794
- CHEMICAL ABSTRACTS, vol. 123, no. 10, 4.September 1995 Columbus, Ohio, US; abstract no. 115447, LIU, XIDE ET AL: "A new type of golden pigment" XP002033694 & HUAXUE SHIJIE (1994), 35(8), 406-8 ,
- CHEMICAL ABSTRACTS, vol. 91, no. 26, 24.Dezember 1979 Columbus, Ohio, US; abstract no. 213266, BHUIYAN, NURUL HAQUE ET AL: "Synthesis of molybdenum(IV) sulfide. Part II. Reaction of molybdenum(VI) oxide with zinc sulfide and cadmium sulfide in the presence of ammonium chloride" XP002033695 & J. CHEM. TECHNOL. BIOTECHNOL. (1979), 29(3), 169-74 ,
- PATENT ABSTRACTS OF JAPAN vol. 010, no. 314 (C-380), 24.Oktober 1986 & JP 61 127623 A (OSAKA CEMENT KK), 14.Juni 1986,

## Beschreibung

Die vorliegende Erfindung betrifft ein Verfahren zur Herstellung von Metalldisulfiden der allgemeinen Formel

(SnₓMe₁₋ₓ)S₂,

wobei
- Me: eines oder mehrere der Elemente Ti, Mo, Fe, Cr, Ta, Nb, Mn, Bi, W und Cu bedeutet
- x: Werte zwischen 0,5 und 1 annehmen kann und deren Weiterverarbeitung zu Dimetalltrisulfiden.

Metalldisulfide wie SnS₂ werden in kleinen Mengen durch Umsetzung der Elemente in geschlossenen Gefäßen bei Temperaturen von 500°C erhalten (G. Brauer, Handbuch der Präparativen Anorganischen Chemie, 3. Auflage, 1978, 2. Band, Seiten 763 bis 765). SnS₂ entsteht auch durch Einleiten von Schwefelwasserstoff in schwach saure Zinn(IV)salzlösungen. Das auch als "Musivgold" bezeichnete Zinndisulfid wird technisch durch Erhitzen auf Rotglut von Zinn-Amalgam mit Schwefel und NH₄Cl erhalten (Ullmann, Encyklopädie der anorganischen Chemie, 3. Auflage, Band 24, Seite 672). SnS₂ wird wegen seiner goldenen Farbe insbesondere zum Vergolden von Gegenständen und in der Malerei eingesetzt. Zinnhaltige Metalldisulfide sind weiterhin für den Einsatz in der Tribotechnik geeignet.

Aus Gmelin, Handbuch der Anorganischen Chemie, Band Zinn, C2, Seiten 37 bis 40, Springer Verlag 1975 war bekannt, daß SnS₂ dadurch erhalten wird, daß amalgamiertes Sn mit überschüssigem Schwefel und Ammoniumchlorid in offenen Gefäßen so lange erhitzt wird, bis alles Hg vertrieben ist (Seite 40 oben). Ebenfalls wird auch hier die Herstellung von SnS₂ aus den Elementen S und Sn in geschlossenen Gefäßen unter sehr hohen Drücken beschrieben (Seite 39 unten). Beide Verfahren sind für eine großtechnische Herstellung nicht geeignet. Die erhaltenen Produkte werden folgerichtig auch als Präparate bezeichnet, die zum einen nach der Sublimation noch 0,01 bis 0,1 % Hg aufweisen oder im anderen Fall nicht ganz frei von SnS und elementarem Schwefel sind.

Für den großtechnischen Einsatz im Bereich tribologischer Anwendungen können derartige Sulfide jedoch nur dann eingesetzt werden, wenn sie kostengünstig hergestellt werden können. Deshalb ist es erforderlich, ein Verfahren bereitzustellen, das es erlaubt, im technischen Maßstab große Mengen herzustellen.

Aufgabe der vorliegenden Erfindung ist es daher, ein einfaches kostengünstiges Verfahren zur Herstellung von zinnhaltigen Metalldisulfiden zur Verfügung zu stellen, welches die beschriebenen Nachteile des Standes der Technik nicht aufweist.

Es wurde nun gefunden, daß die Umsetzung von Zinn, Schwefel und Ammoniumchlorid bei geeigneter Mischungseinstellung auch drucklos zu weitgehend stöchiometrischem SnS₂ bzw. bei Zusatz von weiteren Metallkomponenten zu Sulfidmischungen führt.

Gegenstand dieser Erfindung ist somit ein Verfahren zur Herstellung von Metalldisulfiden der allgemeinen Formel (SnₓMe₁₋ₓ)S₂, wobei Me eines oder mehrere der Elemente Ti, Mo, Fe, Cr, Ta, Nb, Mn, Bi, W und Cu bedeutet und x Werte zwischen 0,5 und 1 annehmen kann, dadurch gekennzeichnet, daß eine Mischung bestehend aus den Metallen Sn, Me und/oder Me-Sulfiden zusammen mit einer überstöchiometrischen Menge an Schwefel, wobei die Menge des Schwefels in der Mischung mindestens 3 mol, bezogen auf x, beträgt in Gegenwart von Halogenidverbindungen, die sich unter den Reaktionsbedingungen rückstandsfrei zersetzen, und/oder Sn und/oder Me-Halogeniden, in einer exothermen Reaktion in inerter Atmosphäre umgesetzt wird.

Ein wesentlicher Vorteil des erfindungsgemäßen Verfahrens ist, daß neben dem Einsatz reiner Metallpulver auch Legierungspulver und Metallsulfide aus Produktionsrückständen eingesetzt werden können, die somit in den Sulfidmischungen wieder nutzbringend eingesetzt werden können. Vorteilhaft werden diese Komponenten auf Teilchengrößen von < 150 µm zerkleinert. Bevorzugt kann x beim erfindungsgemäßen Verfahren werte zwischen 0,7 und 1,0 annehmen.

Bevorzugt werden beim erfindungsgemäßen Verfahren als Halogenidverbindungen Chlorverbindungen, insbesondere Ammoniumchlorid und/oder Zinnchlorid eingesetzt. Besonders ökonomisch läuft das erfindungsgemäße Verfahren, welches so durchgeführt wird, daß die Menge der Halogenidverbindungen in der Mischung wenigstens 0,4 mol, bezogen auf x, beträgt.

Weiterhin ist es vorteilhaft, die Mischung in verdichteter Form einzusetzen.

Eine vorteilhafte Ausführungsform des erfindungsgemäßen Verfahrens besteht darin, daß die Umsetzung durch Zünden in einem Chargenofen durchgeführt wird. Ebenso vorteilhaft kann die Umsetzung in einem auf mindestens 450°C vorgeheizten Durchschubofen durchgeführt werden, wobei auf auf ein Zünden wegen der unter diesen Bedingugen erfolgenden Selbstzündung verzichtet werden kann. Bevorzugt wird dabei die Mischung 0,5 bis 5 Stunden bei Temperaturen von mindestens 450°C gehalten.

Die nach dem erfindungsgemäßen Verfahren erhaltenen Metalldisulfide können in einer Mischung mit Metallsulfiden, gegebenenfalls unter Zusatz von Schwefel, auch bei Normaldruck unter Schutzgas bei Temperaturen im Bereich von 600 bis 800°C innerhalb von 0,5 bis 5 Stunden zu den entsprechenden Dimetalltrisulfiden umgesetzt werden.

Im folgenden wird die Erfindung beispielhaft erläutert, ohne daß darin eine Einschränkung zu sehen ist.

### Beispiel 1

Es wurden 1 mol Zinnpulver <63 µm mit 3,5 mol Schwefelpulver und 0,5 mol Ammonchlorid trocken gemischt und diese Mischung mechanisch durch Kompaktieren verdichtet. 450 g der verdichteten Mischung wurden in Graphitschiffchen gefüllt und in einen mit Stickstoff als Schutzgas beaufschlagten Durchschubofen bei einer Temperatur von 500°C umgesetzt. Nach selbständiger Zündung wurde zum Ausdampfen des überschüssigen Schwefels eine Verweilzeit des Schiffchens von 2 Stunden bei 500°C durch entsprechende Wahl der Schubtaktzeit eingestellt.

Nach Abkühlen des Reaktionsproduktes in der Ofenkühlzone wurde die orange-gelbe, kristalline Masse über 150 µm abgesiebt und zu größeren Chargen vermischt.

Das entstandene Produkt ist ein nahezu phasenreines SnS₂ mit 35,3 Gew.-% Schwefel (Theorie 35,1 %) in kristalliner Form mit geringen Beimengungen an SnS bzw. Sn₂S₃.

### Beispiel 2

Die im Beispiel 1 genannte Vorstoffmischung wurde lose in das Graphitschiffchen eingefüllt und ebenfalls unter strömendem Stickstoff bei 500°C zwei Stunden ausreagieren gelassen. Der lockere Sinterblock wurde in einer Stiftmühle vorzerkleinert und über 150 µm abgesiebt.

Das aus einer Einwaage von 400 g entstandene Endprodukt (262 g) weist ebenfalls als Hauptphase SnS₂ mit Spurenverunreinigungen Sn₂S₃ und SnS auf (Schwefelgehalt 34,8 %).

### Beispiel 3

40 Gew.-% Sn, 40 Gew.-% S sowie 20 Gew.-% SnCl₂*2H₂O wurden trocken gemischt und zu Tabletten gepreßt.

In einem Thermax-Schiffchen wurden 54 g der gepreßten Tabletten in einen auf 500 °C aufgeheizten Röhrenofen geschoben und 0,5 Stunde reagieren gelassen (N₂ als Schutzgas). Das gelbe Reaktionsprodukt (36,4 g) wurde in einer Laborstiftmühle zerkleinert und über 150 µm abgesiebt.

Das aus dieser Reaktion entstandene Produkt weist 34,7 Gew.-% Schwefel und 0,4 % Sauerstoff auf. Phasenanalytisch ist ebenfalls als Hauptanteil SnS₂ neben geringen Spuren an Sn₂S₃ festzustellen.

### Beispiel 4

Eine Mischung aus SnS₂ und SnS (Molverhältnis 1:1) mit 10 Gew.-% Schwefelzusatz wurde gepreßt. Dieses Vorprodukt wurde bei 700°C 2 Stunden bei Normaldruck unter strömendem N₂ als Schutzgas in einem Graphitschiffchen getempert.

Das entstandene Reaktionsprodukt besteht zu 95 % aus Sn₂S₃ in kristalliner Form, der Rest ist SnS₂ und SnS.

### Beispiel 5

192,2 g MoS₃, 118,7 g Sn sowie 32,1 g S wurden mechanisch gemischt und zu Tabletten gepreßt. Die Tabletten wurden in einem Thermaxschiffchen in dem auf 700°C vorgeheizten, mit Stickstoff gespülten Durchschubofen geschoben und drei Stunden zur Reaktion gebracht. Das Reaktionsprodukt (300 g) besteht aus einer Mischung aus MoS₂ + SnS im Molverhältnis 1:1. Dieses Material kann vorteilhaft als Festschmierstoff eingesetzt werden.

### Beispiel 6

100 g Zinnpulver, 50 g Titanhydrid sowie 150 g Schwefel wurden trocken mechanisch gemischt und kompaktiert. Die Umsetzung der vorgepreßten Reaktionsmischung erfolgte bei 700°C unter Stickstoff im Röhrenofen bei einer Verweilzeit von einer Stunde.

Das Reaktionsprodukt, eine innige Mischung aus SnS + TiS₂, ist im Gegensatz zum reinen TiS₂ nicht hygroskopisch und kann nach den üblichen Standardaufbereitungsverfahren verarbeitet werden.

### Beispiel 7

100 g, auf <150µm zerkleinerter, zinnreicher Schmelzrückstand, bestehend aus 10 Gew.-% Sn, 14 Gew.-% W, 1,4 Gew.-% C, Rest Fe wurden mit 200 g Schwefel und 25 g NH₄Cl gemischt, verdichtet und wie in Beispiel 1 umgesetzt.

Das Reaktionsprodukt enthält ca. 32 Gew.-% S und die Röntgenfeinstrukturuntersuchung des Materials zeigt eine Mischung aus FeS₂,SnS₂, WS₂, Fe₂SnS₄. Das im Mörser zerkleinerte und über 150 µm abgesiebte Produkt zeigt bei der thermogravimetrischen Untersuchung mit steigender Temperatur verschiedene Reaktivitätsstufen, die darauf hinweisen, daß die in der Mischung vorhandenen Sulfide ihrer Beständigkeit nach langsam bei steigender Temperatur abgebaut werden. Dies ist für viele tribiologische Anwendungen von Vorteil.

### Beispiel 8

100 g, auf <150 µm zerkleinerter wolframreicher Schmelzrückstand mit ca. 20 Gew.-% W, 5 Gew.-% Sn, 1,5 Gew.-% C, Rest Fe wurde mit 200 g S und 25 g NH₄Cl gemischt, zu Tabletten gepresst und wie Beispiel 1 umgesetzt. Das locker zusammengesinterte Reaktionsprodukt wurde auf - 150 µm zerkleinert und enthält ca. 30 Gew.-% Schwefel. Es besteht aus einem innigen Gemenge aus WS₂, SnS₂, FeS₂ und FeS.

## Patentansprüche

1. Verfahren zur Herstellung von Metalldisulfiden der allgemeinen Formel (SnₓMe₁₋ₓ)S₂, wobei Me eines oder mehrere der Elemente Ti, Mo, Fe, Cr, Ta, Nb, Mn, Bi, W und Cu bedeutet und x Werte zwischen 0,5 und 1 annehmen kann, dadurch gekennzeichnet, daß eine Mischung bestehend aus den Metallen Sn, Me und/oder Me-Sulfiden zusammen mit einer überstöchiometrischen Menge an Schwefel, wobei die Menge des Schwefels in der Mischung mindestens 3 mol, bezogen auf x, beträgt, in Gegenwart von Halogenidverbindungen, die sich unter den Reaktionsbedingungen rückstandsfrei zersetzen, und/oder Sn und/oder Me-Halogeniden, in einer exothermen Reaktion in inerter Atmosphäre umgesetzt wird.

2. Verfahren gemäß Anspruch 1, dadurch gekennzeichnet, daß x Werte zwischen 0,7 und 1,0 annimmt.

3. Verfahren gemäß einem der Ansprüche 1 oder 2, dadurch gekennzeichnet, daß als Halogenidverbindungen Chlorverbindungen eingesetzt werden.

4. Verfahren gemäß einem oder mehreren der Ansprüche 1 bis 3, dadurch gekennzeichnet, daß als Halogenidverbindungen Ammoniumchlorid und/oder Zinnchlorid eingesetzt werden.

5. Verfahren gemäß einem oder mehreren der Ansprüche 1 bis 4, dadurch gekennzeichnet, daß die Menge der Halogenidverbindungen in der Mischung wenigstens 0,4 mol, bezogen auf x, beträgt.

6. Verfahren gemäß einem oder mehreren der Ansprüche 1 bis 5, dadurch gekennzeichnet, daß die Mischung in verdichteter Form eingesetzt wird.

7. Verfahren gemäß einem oder mehreren der Ansprüche 1 bis 6, dadurch gekennzeichnet, daß die Umsetzung durch Zünden in einem Chargenofen durchgeführt wird.

8. Verfahren gemäß einem oder mehreren der Ansprüche 1 bis 6, dadurch gekennzeichnet, daß die Umsetzung in einem auf mindestens 450°C vorgeheizten Durchschubofen durchgeführt wird.

9. Verfahren gemäß einem oder mehreren der Ansprüche 1 bis 8, dadurch gekennzeichnet, daß die Mischung 0,5 bis 5 Stunden bei Temperaturen von mindestens 450°C gehalten wird.

10. Verfahren zur Weiterverarbeitung der nach dem Verfahren gemäß einem oder mehreren der Ansprüche 1 bis 9 erhaltenen Metalldisulfide zu Dimetalltrisulfiden, dadurch gekennzeichnet, daß die Metalldisulfide in einer Mischung mit Metallsulfiden, gegebenenfalls unter Zusatz von Schwefel, 0,5 bis 5 Stunden bei Temperaturen von 600°C bis 800°C umgesetzt werden.

## Claims

1. A method of preparing metal disulphides of general formula (SnₓMe₁₋ₓ)S₂, where Me represents one or more of the elements Ti, Mo, Fe, Cr, Ta, Nb, Mn, Bi, W and Cu, and x can assume values between 0.5 and 1, characterised in that a mixture consisting of the metals Sn and optionally Me and/or Me sulphides is reacted, together with a superstoichiometric amount of sulphur, wherein the amount of sulphur in the mixture is at least 3 molar with respect to x, in an exothermic reaction in an inert atmosphere and in the presence of halide compounds which decompose without leaving a residue under the reaction conditions, and/or in the presence of Sn and/or Me halides.

2. A method according to claim 1, characterised in that x assumes values between 0.7 and 1.0.

3. A method according to either one of claims 1 or 2, characterised in that chlorine compounds are used as halide compounds.

4. A method according to one or more of claims 1 to 3, characterised in that ammonium chloride and/or tin chloride are used as halide compounds.

5. A method according to one or more of claims 1 to 4, characterised in that the amount of halide compounds in the mixture is at least 0.4 molar with respect to x.

6. A method according to one or more of claims 1 to 5, characterised in that the mixture is used in compacted form.

7. A method according to one or more of claims 1 to 6, characterised in that the reaction is effected by ignition in a batch kiln.

8. A method according to one or more of claims 1 to 6, characterised in that the reaction is effected in a pusher kiln preheated to at least 450°C.

9. A method according to one or more of claims 1 to 8, characterised in that the mixture is held for 0.5 to 5 hours at temperatures of at least 450°C.

10. A method of further processing the metal disulphides obtained according to one or more of claims 1 to 9 to form dimetal trisulphides, characterised in that the metal disulphides are reacted in a mixture with metal sulphides, optionally with the addition of sulphur, for 0.5 to 5 hours at temperatures of 600 to 800°C.

## Revendications

1. Procédé pour la préparation de disulfures métalliques de la formule générale (SnₓMe₁₋ₓ)S₂, Me représentant un ou plusieurs des éléments Ti, Mo, Fe, Cr, Ta, Nb, Mn, Bi, W et Cu et x pouvant prendre des valeurs comprises entre 0,5 et 1, caractérisé en ce que l'on fait réagir dans une réaction exothermique dans une atmosphère inerte un mélange constitué des métaux Sn, Me et/ou de sulfures de Me avec une quantité de soufre supérieure a la quantité stoechiométrique, la quantité du souffle dans le mélange étant d'au moins 3 moi rapportée à x, en présence de composés d'halogénures qui se décomposent sans résidus dans les conditions de la réaction, et/ou d'halogénures de Sn et/ou d'halogénures de Me.

2. Procédé selon la revendication 1, caractérisé en ce que x prend des valeurs comprises entre 0,7 et 1,0.

3. Procédé selon l'une quelconque des revendications 1 ou 2, caractérisé en ce que l'on utilise comme composés d'halogénures des composés du chlore.

4. Procédé selon l'une ou plusieurs quelconques des revendications 1 à 3, caractérisé en ce que l'on utilise comme composés d'halogénures du chlorure d'ammonium et/ou du chlorure d'étain.

5. Procédé selon l'une ou plusieurs quelconques des revendications 1 à 4, caractérisé en ce que la quantité des composés d'halogénures dans le mélange est d'au moins 0,4 moi rapportée a x.

6. Procédé selon l'une ou plusieurs quelconques des revendications 1 à 5, caractérisé en ce que l'on utilise le mélange dans une forme comprimée.

7. Procédé selon l'une ou plusieurs quelconques des revendications 1 à 6, caractérisé en ce que l'on réalise la réaction par allumage dans un four discontinu.

8. Procédé selon l'une ou plusieurs quelconques des revendications 1 à 6, caractérisé en ce que l'on réalise la réaction dans un four poussant préchauffé à une température d'au moins 450°C.

9. Procédé selon l'une ou plusieurs quelconques des revendications 1 à 8, caractérisé en ce que l'on maintient le mélange pendant de 0,5 à 5 h a des températures d'au moins 450°C.

10. Procédé pour le traitement ultérieur des disulfures métalliques obtenus dans le procédé selon l'une ou plusieurs quelconques des revendications 1 à 9 en trisulfures bimétalliques, caractérisé en ce que les disulfures métalliques réagissent dans un mélange avec des sulfures métalliques, éventuellement avec addition de soufre, pendant de 0,5 à 5 h à des températures de 600°C à 800°C.
